# EUROPEAN PATENT SPECIFICATION

(11) **EP 2 948 682 B1**
(45) Date of publication and mention of the grant of the patent: **28.08.2019**
(21) Application number: 14743744.6
(22) Date of filing: 23.01.2014
(51) Int. Cl.: F04D 29/08, F16J 15/34

(54) **GEARBOX OUTPUT SEAL**
GETRIEBEAUSGANGSDICHTUNG
JOINT DE SORTIE DE BOÎTE DE VITESSES

(30) Priority: 24.01.2013 US 201313748717; 19.12.2013 US 201314133884
(43) Date of publication of application: 02.12.2015
(60) Divisional application: 19184196.4
(73) Proprietor: Sundyne, LLC, Arvada, Colorado 80007 (US)
(72) Inventor: PETERSON, Steven, Littleton, Colorado 80127 (US); RICKERT, Ronald P., Westminster, Colorado 80023 (US)
(74) Representative: Rankin, Douglas
(86) International application number: PCT/US2014/012629
(87) International publication number: WO 2014/116762

(56) References cited:
- EP-A1- 0 701 074
- DE-U1- 20 310 423
- US-A- 2 430 426
- US-A- 5 658 127
- US-A1- 2011 121 518
- US-A1- 2011 132 667
- SUNDYNE. LMV-333 PUMPS INSTRUCTION AND OPERATION MANUAL. 01 August 2007, pages 1 - 58, XP055266935 Retrieved from the Internet: <URL:http://www.sundyne.com/StaticFiles/Sun dyne_Conten/Asset_Wrapper/Static_Files/pump _iso13 709_api610_oh6_vertical_lmv333_maintenance_ manual.pdf> [retrieved on 2014-04-29]

## Description

### RELATED APPLICATIONS

### BACKGROUND OF THE INVENTION

This application relates to improvements in an output seal for use in a gearbox.

Gearboxes are known, and typically include an input shaft driving an output shaft through a plurality of gears. The gears may provide a speed change from the input shaft to the output shaft, or any number of other functions, such as driving a plurality of components from a single input. In one known gearbox, two gearbox housings abut each other, and receive oil for lubricating the gears. A seal located at the bottom of the housing has typically included a rotating ring which rotates with a shaft extending through a bore in the housing. A stationary seal sits within the housing and has a face in abutting engagement with the rotating ring to provide a seal, preventing lubricant from leaking through the bore of the gearbox.

The prior art has any number of different seal designs, however, it is somewhat challenging to provide a simple sealing system that is mechanically robust, adequately prevents leakage and offers a reliable and predictable life expectancy.

EP 0 701 074 A1 (Kaydon Corporation) relates to a dry gas seal assembly for pumps and compressors comprising a pair of dry gas face seals. A described dry gas seal includes a face seal ring locked against rotation and further includes a plurality of compression springs which act to resiliently bias an annular follwer into engagement with a rear face of the face seal ring.

### SUMMARY OF THE INVENTION

Various aspects of the present invention are defined in the appended claims. A seal assembly for use in a gearbox has a rotating ring to be secured to a shaft, and having a contact face. The contact face abuts a stationary seal. The stationary seal has a retainer with a channel extending to a bottom. A floating seal portion is positioned within the retainer and a spring is positioned within the channel and inward of an inner end of the floating seal portion, and biasing the floating seal portion outwardly. There is an inner bore of the retainer which is spaced from an outer periphery of the floating seal portion. One of the inner bore and the outer periphery has a plurality of radially located pins. The other of the inner bore and the outer periphery is formed with the plurality of recesses. The pins are received in the recesses, to prevent rotation of the floating seal portion within the retainer.

These and other features may be best understood from the following drawings and specification.

### BRIEF DESCRIPTION OF THE DRAWINGS

Figure 1 shows a gearbox.
Figure 2 shows a gearbox housing and a seal.
Figure 3 is a cross-section of a seal.
Figure 4 is a top view of the seal.
Figure 5 shows a spring incorporated into the seal.
Figure 6 shows a rotating ring.
Figure 7 is a top view of an alternative seal embodiment.
Figure 8 shows a top of an alternative floating seal.
Figure 9 shows a bottom of the alternative floating seal.
Figure 10 shows a cross section of the alternative floating seal.
Figure 11 shows a cross section of a seal with the alternative floating seal.

### DETAILED DESCRIPTION

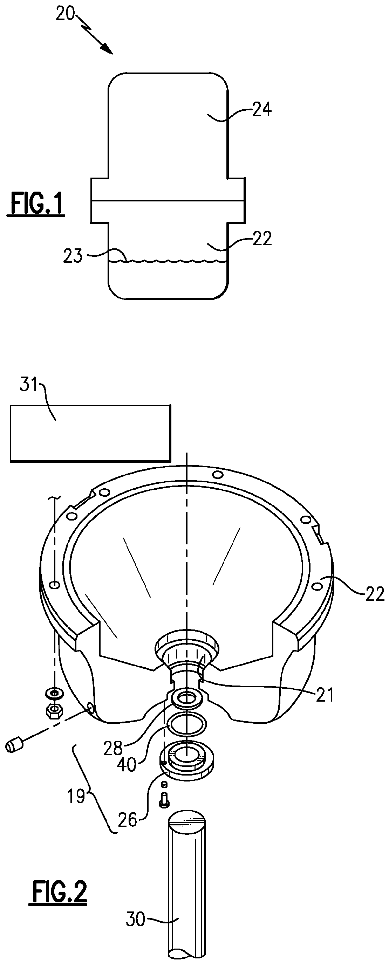

As shown in Figure 1, a gearbox 20 incorporates an upper housing 24 and a lower housing 22. An oil level 23 is typically provided within the lower housing 22.

Figure 2 is an exploded view showing the lower gearbox housing 22. As shown, a bore 21 extends outwardly of the housing. A seal assembly 19, incorporating an o-ring 40, a rotating ring 28, and a stationary seal portion 26, is received in the bore 21. The rotating ring 28 rotates with a shaft 30 which extends into the gear housing 22 and is connected to gears 31, which are shown schematically.

The purpose of the combined seal 19 is to prevent leakage of lubricant through the bore 21 while allowing the shaft 30 to rotate.

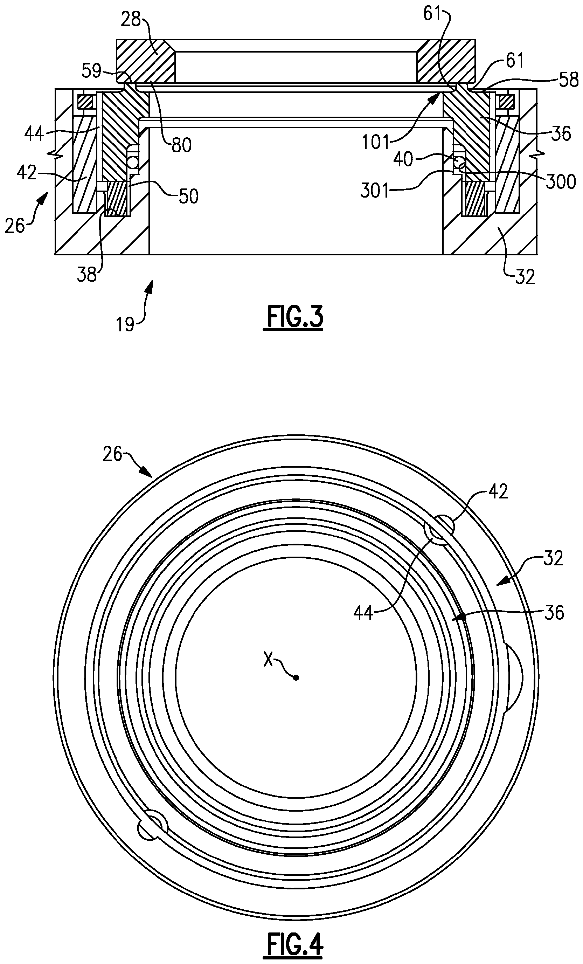

Figure 3 is a cross-section through the combined seal 19. As shown, a retainer 32 incorporates a plurality of pins 42 (see Figure 4 also) which extend into the recesses 44 in a floating seal portion 36. The o-ring 40 is captured between a bore 301 located on retainer 32, and a counterbore 300 located on the floating seal portion 36. A channel 38 within the retainer 32 receives a spring 50, which is shown schematically in this Figure.

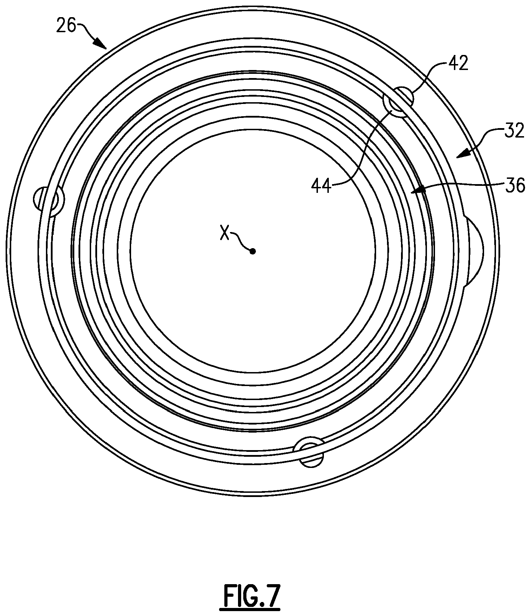

Figure 4 shows that there are pins 42 extending into recesses 44. The pins 42 prevent the floating seal portion 36 from rotating within the retainer 32. The pins 42 are disclosed as separate elements from the retainer 32, but can also be formed integrally. However, there is clearance between the pins 42 and the recesses 44 that will allow the floating seal portion 36 to move freely in a vertical direction, and to articulate about an axial centerline X, for limited angles. This allows floating seal portion 36 to move and conform to a mating rotating ring contact surface, as will be explained below. Figure 4 shows two pins 42 being utilized. Alternatively, Figure 7 shows three pins 42 being utilized. Of course, more or less pins 42 could be utilized.

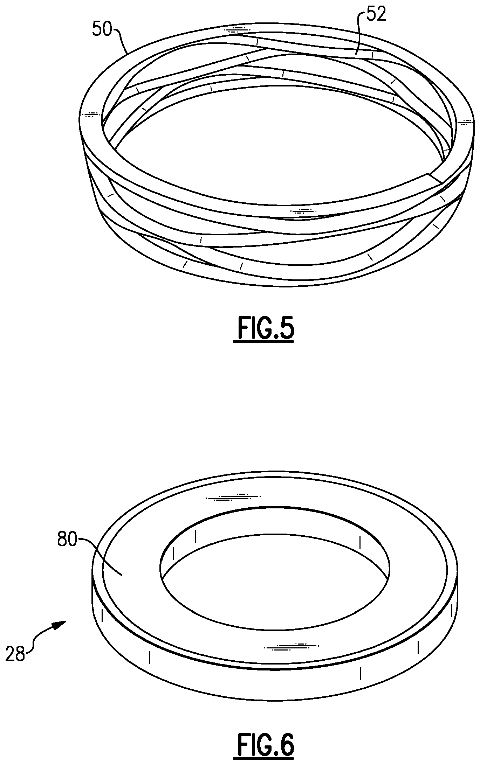

Figure 5 shows that a single spring 50 is formed by a plurality of webs 52. The prior art generally included a plurality of springs biasing a floating seal portion towards a rotating ring. The use of a single spring simplifies the assembly and provides a uniform mechanical load distribution to the floating seal. One example spring is available from Smalley Steel Ring Co. of Lake Zurich, Illinois. Of course, other springs can be utilized.

Figure 3 shows a surface or sealing nose 59 formed at a fixed distance relative to inner peripheral surface 101 of the outer seal portion 58. Locating the sealing nose 59 at a specific location improves the operation of the seal, and provides an optimal pressure balance ratio between a hydraulic loading area and a sealing interface area.

Figure 3 shows recesses 61 formed radially inward and outward of the sealing nose 59. Sealing nose 59 contacts a contact face 80 of the rotating ring 28.

The floating seal portion 36, and the rotating ring 28, may be generally formed of a silicon carbide material. Of course, there may be other materials included within each of these components. As one example only, the contact surface face 80 of the rotating ring 28 is formed with a hardened material, as shown in Figure 6.

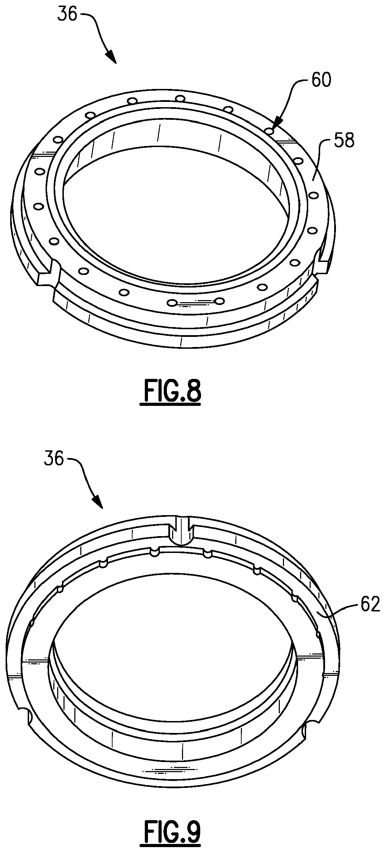

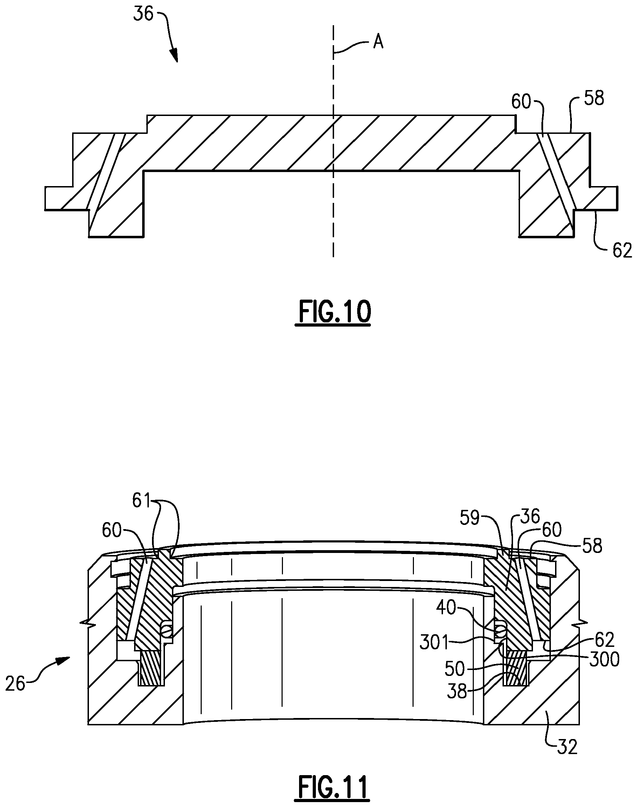

Figures 8-10 show one example floating seal 36 with a plurality of cooling holes 60 defined therein. The example holes 60 are defined from the outer seal portion 58 and extend at a non-parallel angle with respect to central axis A to a lower annulus 62 that supplies fluid to the holes 60. The example holes 60 are angled such that the openings at the outer seal portion 58 are closer to the central axis than the openings at the lower annulus 62. A pressure differential exists between the entry and exit of each hole 60 which promotes flow and subsequent heat removal from the substrate. Figure 11 shows an example stationary seal 26 having a floating seal 36 with a plurality of cooling holes 60.

Figure 6 shows a detail of the rotating ring 28. A contact surface 80 is provided with a diamond material, which will decrease a co-efficient of friction, and increases surface hardness for the surface which is in contact with the sealing nose 59. In one embodiment, a polycrystalline structure diamond material is applied to the face. One acceptable material is available from Advanced Diamond Technologies of Romeoville, Illinois.

## Claims

1. A stationary seal comprising:
a stationary seal portion (26) including a retainer (32) with a channel (38) extending to a bottom, and a floating seal portion (36) formed of a silicon carbide material positioned in said retainer (32) with a spring (50) positioned within the channel (38) and between an inner end of said floating seal portion (36), and biasing said floating seal portion (36) outwardly, wherein said spring (50) is a single spring received inwardly of said floating seal portion (36), and said floating seal portion (36) is formed with a plurality of holes (60) therein; and
an inner bore (301) of said retainer (32) at said channel (38) spaced from an outer periphery of said floating seal portion (36), and one of said inner bore (301) and said outer periphery formed with a plurality of radially located pins (42), and the other of said inner bore (301) and said outer periphery having a plurality of recesses (44), with said pins (42) received in said recesses (44) to prevent rotation of said floating seal portion (36) within said retainer (32); and
an o-ring captured between a retainer bore and a counterbore located on the floating seal portion (36).

2. The stationary seal as set forth in claim 1, wherein said spring has a plurality of webs; or
wherein a sealing nose is formed on said floating seal portion at a fixed distance from the axial centerline; or
wherein a single spring is received in said channel inwardly of said floating seal portion, said single spring having a plurality of webs, and a sealing nose formed on said floating seal portion at a fixed distance from an axial centerline.

3. A seal assembly (19) for use in a gearbox comprising:
the stationary seal of claim 1, wherein the spring is positioned inward of the inner end of the floating seal portion; and
a rotating ring (28) to be secured to a shaft (30), and having a contact face (80), said contact face (80) facing the stationary seal.

4. A gearbox (20) comprising:
a plurality of gears (31) and a shaft (30) connected to at least one of said gears, said gears and said shaft receive in a gearbox housing including an upper gearbox housing (24) and a lower gearbox housing (22), said lower gearbox housing (22) including a bore (21) and said shaft extending through said bore, and a seal assembly sealing said shaft (30) at said bore; and
the seal assembly (19) having a rotating ring (28) secured to the shaft (30), and having a contact face (80), said contact face abutting a stationary seal portion (26) according to claim 1.

5. The gearbox as set forth in claim 5 or the seal assembly as set forth in claim 4, wherein said pins (42) are on the inner periphery of said retainer (32), and said recesses (44) are formed on said outer periphery of said floating seal portion (36).

6. The gearbox as set forth in claim 4 or the seal assembly as set forth in claim 1, wherein said single spring (50) has a plurality of webs (52).

7. The gearbox as set forth in claim 4 or the seal assembly as set forth in claim 3, wherein a sealing nose (59) is formed on said floating seal portion (36) at a fixed distance from the axial centerline and is in contact with said rotating ring contact surface (80).

8. The gearbox as set forth in claim 4 or the seal assembly as set forth in claim 3, wherein said rotating ring (28) is formed of a silicon carbide material.

9. The gearbox as set forth in claim 4 or the seal assembly as set forth in claim 3, wherein said rotating ring contact surface (80) is provided with a diamond hardening surface material, optionally
wherein said diamond material is a polycrystalline structured diamond material.

10. The gearbox as set forth in claim 4 or the seal assembly as set forth in claim 3 , wherein said pins (42) are on the inner periphery of said retainer (32), and said recesses (44) are formed on said outer periphery of said floating seal portion (36), said floating seal portion (36) is made of a silicon carbide material, an o-ring (40) is captured between said retainer bore (301) and a counterbore (300) in said floating seal portion (36), a single spring (50) is received in said channel (38) inwardly of said floating seal portion (36), said single spring (50) having a plurality of webs (52), a sealing nose (59) formed on said floating seal portion (36) at a fixed distance from the axial centerline and said rotating ring (28) is made of a silicon carbide material, and said contact surface (80) provided with a diamond hardening surface material, and said diamond material is a polycrystalline structured diamond material.

## Patentansprüche

1. Feststehende Dichtung, umfassend:
einen feststehenden Dichtungsabschnitt (26), der einen Halter (32) mit einem sich zu einem Boden erstreckenden Kanal (38) und einen aus einem Siliziumkarbidmaterial gebildeten schwimmenden Dichtungsabschnitt (36), der in dem Halter (32) positioniert ist, mit einer Feder (50), die im Kanal (38) und zwischen einem inneren Ende des schwimmenden Dichtungsabschnitts (36) positioniert ist und den schwimmenden Dichtungsabschnitt (36) nach außen vorspannt, umfasst, wobei die Feder (50) eine Einzelfeder ist, die einwärts des schwimmenden Dichtungsabschnitts (36) aufgenommen ist, und der schwimmende Dichtungsabschnitt (36) mit einer Vielzahl von Löchern (60) darin gebildet ist; und
eine Innenbohrung (301) des Halters (32) am Kanal (38), die von einem Außenumfang des schwimmenden Dichtungsabschnitts (36) beabstandet ist, und wobei einer von der Innenbohrung (301) und dem Außenumfang mit einer Vielzahl von radial positionierten Stiften (42) gebildet ist und der andere von der Innenbohrung (301) und dem Außenumfang eine Vielzahl von Aussparungen (44) aufweist, wobei die Stifte (42) in den Aussparungen (44) aufgenommen sind, um eine Rotation des schwimmenden Dichtungsabschnitts (36) im Halter (32) zu verhindern; und
einen O-Ring, der zwischen einer Halterbohrung und einer im schwimmenden Dichtungsabschnitt (36) positionierten Senkung aufgenommen ist.

2. Feststehende Dichtung nach Anspruch 1, wobei die Feder eine Vielzahl von Rippen aufweist;
oder wobei eine Dichtungsnase an dem schwimmenden Dichtungsabschnitt in einem festen Abstand von der axialen Mittellinie gebildet ist; oder
wobei eine Einzelfeder in dem Kanal einwärts von dem schwimmenden Dichtungsabschnitt aufgenommen ist, wobei die Einzelfeder eine Vielzahl von Rippen aufweist, und eine Dichtungsnase an dem schwimmenden Dichtungsabschnitt in einem festen Abstand von einer axialen Mittellinie gebildet ist.

3. Dichtungsanordnung (19) zur Verwendung in einem Getriebe, umfassend:
die feststehende Dichtung aus Anspruch 1, wobei die Feder einwärts von dem inneren Ende des schwimmenden Dichtungsabschnitts positioniert ist; und
einen rotierenden Ring (28), der an einer Welle (30) befestigt werden soll und eine Berührungsfläche (80) aufweist, wobei die Berührungsfläche (80) der feststehenden Dichtung zugewandt ist.

4. Getriebe (20), umfassend:
eine Vielzahl von Zahnrädern (31) und eine Welle (30), die mit mindestens einem der Vielzahl von Zahnrädern verbunden ist, wobei die Zahnräder und die Welle in einem Getriebegehäuse aufgenommen sind, das ein oberes Getriebegehäuse (24) und ein unteres Getriebegehäuse (22) umfasst, wobei das untere Getriebegehäuse (22) eine Bohrung (21) umfasst und sich die Welle durch die Bohrung erstreckt, und eine Dichtungsanordnung die Welle (30) an der Bohrung abdichtet; und
die Dichtungsanordnung (19), die einen rotierenden Ring (28) aufweist, der an der Welle (30) befestigt ist, und eine Berührungsfläche (80) aufweist, wobei die Berührungsfläche an einem feststehenden Dichtungsabschnitt (26) nach Anspruch 1 anliegt.

5. Getriebe nach Anspruch 5 oder Dichtungsanordnung nach Anspruch 4, wobei die Stifte (42) an dem Innenumfang des Halters (32) sind und die Aussparungen (44) an dem Außenumfang des schwimmenden Dichtungsabschnitts (36) gebildet sind.

6. Getriebe nach Anspruch 4 oder Dichtungsanordnung nach Anspruch 1, wobei die Einzelfeder (50) eine Vielzahl von Rippen (52) aufweist.

7. Getriebe nach Anspruch 4 oder Dichtungsanordnung nach Anspruch 3, wobei eine Dichtungsnase (59) an dem schwimmenden Dichtungsabschnitt (36) in einem festen Abstand von der axialen Mittellinie gebildet ist und in Berührung mit der Berührungsfläche (80) des rotierenden Ringes ist.

8. Getriebe nach Anspruch 4 oder Dichtungsanordnung nach Anspruch 3, wobei der rotierende Ring (28) aus einem Siliziumkarbidmaterial gebildet ist.

9. Getriebe nach Anspruch 4 oder Dichtungsanordnung nach Anspruch 3, wobei die Berührungsfläche (80) des rotierenden Ringes mit einem Diamant-Verhärtungsoberflächenmaterial versehen ist, optional
wobei das Diamantmaterial ein polykrystallines strukturiertes Diamantmaterial ist.

10. Getriebe nach Anspruch 4 oder Dichtungsanordnung nach Anspruch 3, wobei die Stifte (42) am Innenumfang des Halters (32) sind und die Aussparungen (44) am Außenumfang des schwimmenden Dichtungsabschnitts (36) gebildet sind, der schwimmende Dichtungsabschnitt (36) aus einem Siliziumkarbidmaterial besteht, ein O-Ring (40) zwischen der Halterbohrung (301) und einer Senkung (300) im schwimmenden Dichtungsabschnitt (36) aufgenommen ist, eine Einzelfeder (50) im Kanal (38) einwärts des schwimmenden Dichtungsabschnitts (36) aufgenommen ist, die Einzelfeder (50) eine Vielzahl von Rippen (52) aufweist, eine Dichtungsnase (59) an dem schwimmenden Dichtungsabschnitt (36) in einem festen Abstand von der axialen Mittellinie gebildet ist und der rotierende Ring (28) aus Siliziumkarbidmaterial besteht, und die Berührungsfläche (80) mit einem Diamant-Verhärtungsoberflächenmaterial versehen ist, und das Diamantmaterial ein polykrystallines strukturiertes Diamantmaterial ist.

## Revendications

1. Joint fixe comprenant :
une partie de joint fixe (26) comprenant un dispositif de retenue (32) avec un canal (38) s'étendant vers un fond, et une partie de joint flottante (36) formée avec un matériau à base de carbure de silicium positionné dans ledit dispositif de retenue (32) avec un ressort (50) positionné à l'intérieur du canal (38) et entre une extrémité interne de ladite partie de joint flottante (36), et sollicitant ladite partie de joint flottante (36) vers l'extérieur, dans lequel ledit ressort (50) est un ressort unique reçu vers l'intérieur de ladite partie de joint flottante (36), et ladite partie de joint flottante (36) est formée avec une pluralité de trous (60) à l'intérieur de cette dernière ; et
un alésage interne (301) dudit dispositif de retenue (32) au niveau dudit canal (38) espacé d'une périphérie externe de ladite partie de joint flottante (36) et l'un parmi ledit alésage interne (301) et ladite périphérie externe étant formé avec une pluralité de broches positionnées de manière radiale (42), et l'autre parmi ledit alésage interne (301) et ladite périphérie externe ayant une pluralité d'évidements (44), avec lesdites broches (42) reçues dans lesdits évidements (44) pour empêcher la rotation de ladite partie de joint flottante (36) à l'intérieur dudit dispositif de retenue (32) ; et
un joint torique capturé entre un alésage de dispositif de retenue et un contre-alésage positionné sur la partie de joint flottante (36).

2. Joint fixe selon la revendication 1, dans lequel ledit ressort a une pluralité de nervures ; ou bien
dans lequel un nez d'étanchéité est formé sur ladite partie de joint flottante à une distance fixe de la ligne centrale axiale ; ou bien
dans lequel un ressort unique est reçu dans ledit canal vers l'intérieur de ladite partie de joint flottante, ledit ressort unique ayant une pluralité de bandes, et un nez d'étanchéité formé sur ladite partie de joint flottante à une distance fixe d'une ligne centrale axiale.

3. Ensemble de joint (19) destiné à être utilisé dans une boîte de vitesses comprenant :
le joint fixe selon la revendication 1, dans lequel le ressort est positionné vers l'intérieur de l'extrémité interne de la partie de joint flottante ; et
une bague rotative (28) à fixer sur un arbre (30) et ayant une face de contact (80), ladite face de contact (80) faisant face au joint d'étanchéité fixe.

4. Boîte de vitesses (20) comprenant :
une pluralité d'engrenages (31) et un arbre (30) raccordé à au moins l'un desdits engrenages, lesdits engrenages et ledit arbre sont reçus dans un boîtier de boîte de vitesses comprenant un boîtier de boîte de vitesses supérieur (24) et un boîtier de boîte de vitesses inférieur (22), ledit boîtier de boîte de vitesses inférieur (22) comprenant un alésage (21) et ledit arbre s'étendant à travers ledit alésage, et un ensemble de joint scellant ledit arbre (30) au niveau dudit alésage ; et
l'ensemble de joint (19) ayant une bague rotative (28) fixée sur l'arbre (30) et ayant une face de contact (80), ladite face de contact venant en butée contre une partie de joint fixe (26) selon la revendication 1.

5. Boîte de vitesses selon la revendication 5 ou ensemble de joint selon la revendication 4, dans laquelle (lequel) lesdites broches (42) sont sur la périphérie interne dudit dispositif de retenue (32) et lesdits évidements (44) sont formés sur ladite périphérie externe de ladite partie de joint flottante (36).

6. Boîte de vitesses selon la revendication 4 ou ensemble de joint selon la revendication 1, dans laquelle (lequel) ledit ressort unique (50) a une pluralité de nervures (52).

7. Boîte de vitesses selon la revendication 4 ou ensemble de joint selon la revendication 3, dans laquelle (lequel) un nez d'étanchéité (59) est formé sur ladite partie de joint flottante (36) à une distance fixe de la ligne centrale axiale et est en contact avec ladite surface de contact de bague rotative (80).

8. Boîte de vitesses selon la revendication 4 ou ensemble de joint selon la revendication 3, dans laquelle (lequel) ladite bague rotative (28) est formée avec un matériau à base de carbure de silicium.

9. Boîte de vitesses selon la revendication 4 ou ensemble de joint selon la revendication 3, dans laquelle (lequel) ladite surface de contact de bague rotative (80) est prévue avec un matériau de surface de durcissement à base de diamant, facultativement
dans laquelle (lequel) ledit matériau à base de diamant est un matériau à base de diamant à structure polycristalline.

10. Boîte de vitesses selon la revendication 4 ou ensemble de joint selon la revendication 3, dans laquelle (lequel) lesdites broches (42) sont sur la périphérie interne dudit dispositif de retenue (32) et lesdits évidements (44) sont formés sur ladite périphérie externe de ladite partie de joint flottante (36), ladite partie de joint flottante (36) est réalisée avec un matériau à base de carbure de silicium, un joint torique (40) est capturé entre ledit alésage de dispositif de retenue (301) et un contre-alésage (300) dans ladite partie de joint flottante (36), un ressort unique (50) est reçu dans ledit canal (38) vers l'intérieur de ladite partie de joint flottante (36), ledit ressort unique (50) ayant une pluralité de nervures (52), un nez d'étanchéité (59) formé sur ladite partie de joint flottante (36) à une distance fixe de la ligne centrale axiale et ladite bague rotative (28) est réalisée avec un matériau à base de carbure de silicium, et ladite surface de contact (80) est prévue avec un matériau de surface de durcissement à base de diamant et ledit matériau à base de diamant est un matériau à base de diamant à structure polycristalline.
